# EUROPÄISCHE PATENTSCHRIFT

(11) **EP 0 689 037 B1**
(45) Veröffentlichungstag und Bekanntmachung des Hinweises auf die Patenterteilung: **18.12.1996**
(21) Anmeldenummer: 95102750.7
(22) Anmeldetag: 27.02.1995
(51) Int. Cl.: G01F 15/06, G01D 11/24, G01D 13/08

(54) **Zählwerk für Flüssigkeits- und Gaszähler**
Counting mechanism for liquid and gas meters
Mécanisme compteur pour des compteurs à liquide ou à gaz

(30) Priorität: 23.06.1994 EP 94109694
(43) Veröffentlichungstag der Anmeldung: 27.12.1995
(73) Patentinhaber: Körner, Hans-Holger, D-23758 Oldenburg in Holstein (DE)
(72) Erfinder: Körner, Hans-Holger, D-23758 Oldenburg in Holstein (DE)
(74) Vertreter: Glawe, Delfs, Moll & Partner

(56) Entgegenhaltungen:
- EP-A- 0 317 819
- EP-A- 0 471 865
- DE-A- 3 831 882
- FR-A- 2 151 853

## Beschreibung

Die Erfindung betrifft ein Zählwerk für Flüssigkeits- und Gaszähler bestehend aus einem Zählwerksoberteil und einem Zählwerksunterteil, in dem ein Kupplungstrieb in einer Achse des Zählwerksunterteils verläuft, wobei der Kupplungstrieb zählwerksseitig eine im Zählwerksoberteil angeordnete Zähleinrichtung antreibt, die von einer Zählwerkshaube umschlossen wird, durch die eine Anzeige der Zähleinrichtung ablesbar ist.

Zähler insbesondere Wohnungszähler sind wie alle Produkte, bei denen ein steigender Bedarf vorliegt, verschiedentlich weiterentwickelt worden. Schwerpunkte waren z.B. messtechnische Klasse, Messdauerhaftigkeit oder auch Montage - bzw. Servicefreundlichkeit.

Die besonders von der Wohnungswirtschaft geforderte Miniaturisierung der Zähler wegen beengter Einbauverhältnisse, sowie der allgemeine Trend, Zeiger durch Rollen bei der Anzeige zu ersetzen, hat jedoch nicht immer zu Verbesserungen bei der Ablesung geführt.

Bei der klassischen Bauart der Wohnungszähler wird der lange Kupplungstrieb (Mitteltrieb der Stirndrehmagnetkupplung) mit einem Reflektor oder Segmentstern ausgerüstet, der direkt unter der Sichtglasscheibe liegt, um per Stroboskop oder Impulszählvergleich in bekannter Weise den Zähler gegen einen Vergleichszähler einzustellen. Durch diese Bauart ist es erforderlich, den Rollenblock der Anzeige aussermittig zu setzen, sodass die Breite des Rollenblocks eingeschränkt ist.

Um die standardmässig geforderte Anzahl von 8 Rollen zu erreichen, werden schmale Rollen eingesetzt, die auch zwangsläufig nur eine schmale Ziffernbreite zulassen. Dadurch wird die Ablesefähigkeit bzw. die Ablesesicherheit eingeschränkt.

Für in Wohnungen eingesetzte Zähler waren Einbaunormen schwer zu realisieren, da die Zähler auch im Altbau in vorhandene Installationen montiert werden müssen. Zudem wählt man den aus technischer und wirtschaftlicher Sicht günstigsten Montageort, sodass sich aus ungünstigen Einbaupositionen häufig auch ungünstige Ablesemöglichkeiten ergeben. Ablesefehler wegen z.B. schlechter Lichtverhältnisse sind daher nicht auszuschliessen. Beanstandungen der Kostenabrechnung bis hin zu Klagen wegen Vermögensschäden sind dann die unangenehme Folge. Verschiedene verbesserte Lösungen wie z.B. Zählwerke mit seitlicher Ablesung oder Kombizählwerke sind aus dem Stand der Technik bekannt.

Aus der Schrift DE-A1-3 831 882 ist ein zylinderförmiges Zählwerk für einen Wasserzähler bekannt geworden. Eine in der vertikal verlaufenden Zylinderachse angeordnete und von einer Magnetkupplung angetriebene Achse treibt mittels eines Schaltritzels ein Rollenzählwerk an. Das Rollenzählwerk wird von einem Wandelement umschlossen. Im horizontalen Teil und im geneigten Teil des Wandelementes ist je ein Sichtfenster angeordnet, das die Ablesung des Zählerstandes des Rollenzählwerkes von oben oder von der Seite erlaubt. Als Gehäuse ist eine Abdeckkappe mit einer im horizontalen Teil des Wandelementes angeordneten Fensteröffnung oder eine Abdeckkappe mit einer im geneigten Teil des Wandelementes angeordneten Fensteröffnung vorgesehen, sodass eine Ablesung des Zählerstandes entweder von oben oder von der Seite möglich ist.

Ein Nachteil der bekannten Einrichtungen liegt darin, dass die jeweilige Bauform schon bei der Bestellung bestimmt werden muss. Ein weiterer Nachteil liegt darin, dass die Nullen der Ziffernrollen und somit die Nullstellung des Rollenzählwerkes je nach Lage der Fensteröffnung der Abdeckkappe werkseitig gesetzt werden müssen. Dies bedingt wiederum die Herstellung und Lagerhaltung von zwei unterschiedlichen Typen von Zählwerken.

Hier will die Erfindung Abhilfe schaffen. Die Erfindung, wie sie in den Ansprüchen gekennzeichnet ist, löst die Aufgabe, die Nachteile der bekannten Einrichtung zu vermeiden und ein Zählwerk mit verbesserter Ablesefähigkeit bzw. Ablesesicherheit zu schaffen, das einfach im Aufbau ist und zeitsparend zusammengebaut werden kann.

Der durch die Erfindung erreichte Vorteil ist im wesentlichen darin zu sehen, dass die günstigste Ableseposition am Einbauort gewählt werden kann. Weitere Vorteile ergeben sich daraus, dass das Zählwerk wegen des einfachen Aufbaus auch einfach repariert und zurückgestellt werden kann. Mechanische Zähler werden heute sowohl im Messwerk als auch im Zählwerk aus hochwertigen Kunststoffmaterialien hergestellt, die Abriebfestigkeit, Temperaturbeständigkeit, UV- und Alterungsbeständigkeit gewährleisten. Die Eichgültigkeitsdauer von z.B. 5 oder 6 Jahren je nach Land ist daher wesentlich geringer als die Lebensdauer eines solchen Zählers. Mit einem definierten Prüfaufwand und Austausch bestimmter Verschleissteile lässt sich die Lebensdauer eines demontagefähigen Zählwerkes erheblich verlängern. Damit wird die allseits geforderte Müllvermeidung erreicht und zudem wird zugunsten von Servicetätigkeit Massenproduktion und arbeitsplatzvernichtende Automatisierung erspart, ohne dass ein volkswirtschaftlich höherer Aufwand entsteht. Ausserdem ist das erfindungsgemässe Zählwerk durch die bei Luftfrachttransporten entstehenden Druckunterschiede weniger gefährdet, da keine Innendruckunterschiede zwischen Zählwerksunterteil und Zählwerksoberteil entstehen können.

Im folgenden wird die Erfindung anhand von lediglich einen Ausführungsweg darstellenden Zeichnungen näher erläutert. Es zeigen:
- Fig. 1: ein erfindungsgemässes Zählwerk entlang eines Schnittes A-B der Fig. 3,
- Fig. 2: das erfindungsgemässe Zählwerk entlang eines Schnittes C-D der Fig. 3,
- Fig. 3: eine Draufsicht auf ein Zählwerksunterteil des erfindungsgemässen Zählwerkes und
- Fig. 4: einen Zähler mit dem erfindungsgemässen Zählwerk.

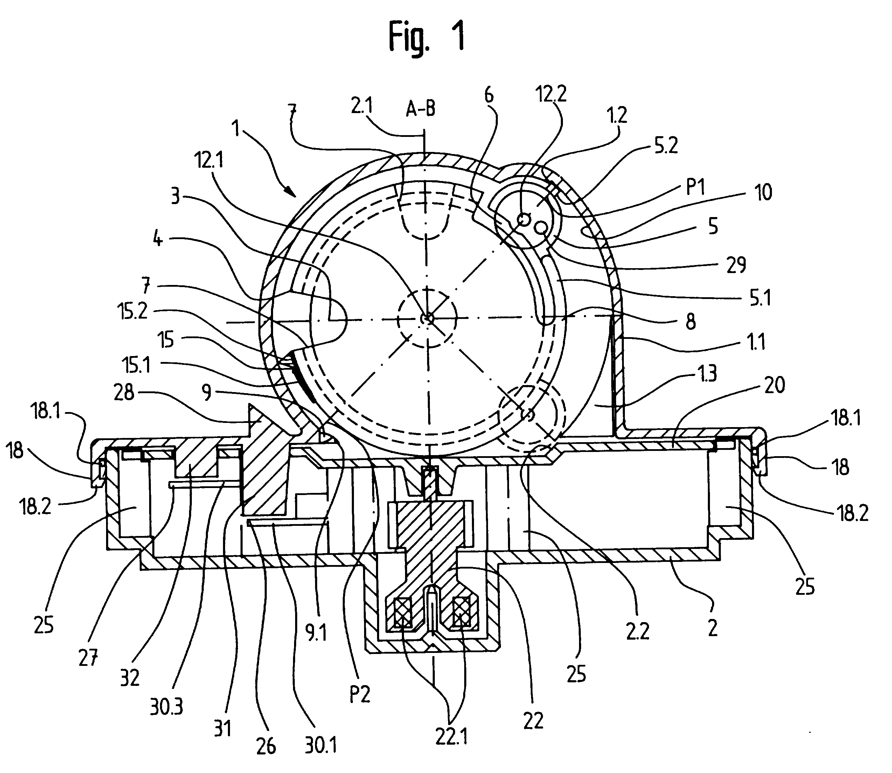

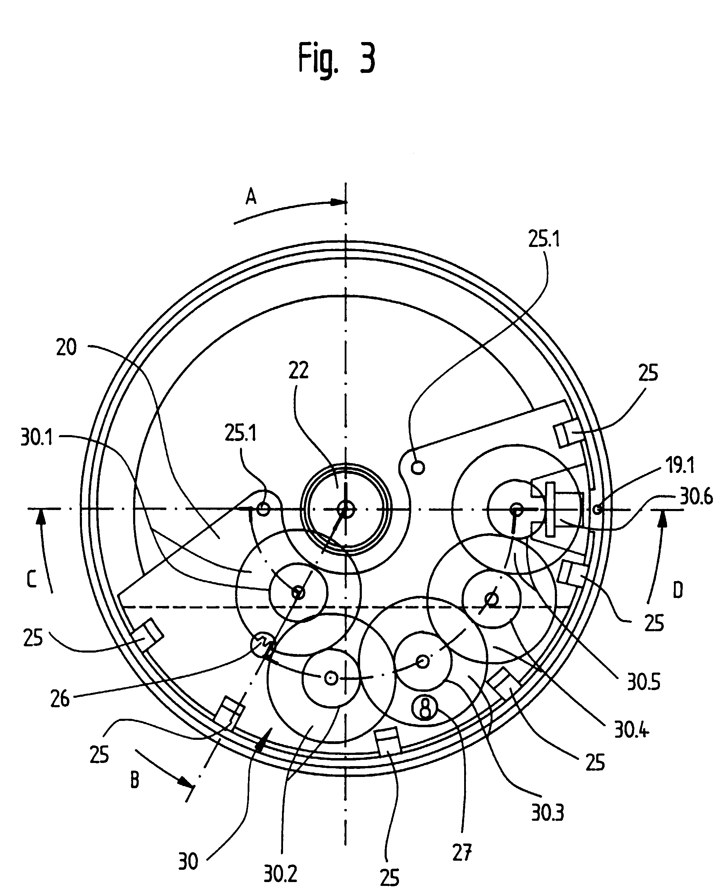

In den Fig. 1 bis 3 ist mit 1 ein Zählwerksoberteil bezeichnet, der im wesentlichen aus einer transparenten Zählwerkshaube 1.1, einem Rollenblock 3, einem Rollenblockcontainer 4 und einem Mitnehmerblock 6 besteht. Die transparente Zählwerkshaube 1.1 steht in lösbarer Verbindung mit einem zylinderförmigen Zählwerksunterteil 2. Die Zählwerkshaube 1.1 umschliesst den beispielsweise mittig auf dem Zählwerksunterteil 2 liegend angeordneten zylinderförmigen Rollenblockcontainer 4 mit dem konzentrisch angeordneten Rollenblock 3. Mit dem beispielsweise mittig zu einer Achse 2.1 des Zählwerksunterteils 2 angeordneten aus Ziffernrollen bestehenden Rollenblock 3 ist ein in Ziffernbreite und Ziffernhöhe grösserer Rollentyp einsetzbar, der eine um ca. 25% grössere Ziffernhöhe und eine um ca. 50% grössere Ziffernbreite erlaubt. Der Mitnehmerblock 6 wird von Mitnehmern 6.1 gebildet, die an einer Mitnehmerachse 12.2 angeordnet sind. Die Mitnehmerachse 12.2 wird von einer den Mitnehmerblock 6 teilweise umschliessenden Aufhängung 5 getragen, die in eine als Feder wirkende Zunge 5.1 des Rollenblockcontainers 4 übergeht.

Die Position des Rollenblockes 3 ist mittels eines Drehzapfens 16 von aussen mit einem einfachen Werkzeug, beispielsweise mittels eines Schraubenziehers oder einer Geldmünze, durch den Installateur am Montageort auf die günstigste Ableseposition stufenlos über einen Gesamtwinkel von 90° zwischen einem ersten Endanschlag 1.2 und einem zweiten Endanschlag 2.2 einstellbar.

Die äussere Form der transparenten Zählwerkshaube 1.1 verläuft in einer Richtung radial über den gesamten Schwenkbereich, sodass die bei Zuhilfenahme von manchmal notwendigem Kunstlicht bei der Ablesung von flachen Sichtglasscheiben üblicher Zählwerke auftretenden störenden Lichtreflexe nicht entstehen.

Bei abgenommenem Zählwerksunterteil 2 lässt sich der Rollenblock 3 von einer 0°-Position P1 in eine 180°-Position P2 schwenken, sodass über ein Rückstellfenster 8 im Rollenblockcontainer 4 ein Zugriff auf die Rollen möglich wird, sodass nach Ausrasten der den Mitnehmerblock 6 bildenden Mitnehmer 6.1 alle Ziffernrollen auf Null gesetzt werden können. Dabei werden die einzelnen Mitnehmer 6.1 über eine innen an der Zählwerkshaube 1.1 angeordnete aus ersten Nasen 9 bestehende Nasenreihe in der richtigen seriellen Position gehalten, die nach Nullsetzung der Rollen ein funktionsrichtiges Wiedereinrasten garantiert.

Zur Vorbereitung dieser Nullsetzung wird durch zwei zweite Nasen 9.1 rechts und links von der aus den ersten Nasen 9 gebildeten Nasenreihe der Mitnehmerblock 6 über zwei an der Aufhängung 5 angebrachte erste Zapfen 29 angehoben. Bei falscher serieller Position eines der Mitnehmer 6.1 würde der gefedert angeordnete Mitnehmerblock 6 nicht wieder in seine ursprüngliche Position zurückkehren können. Beim Schwenk auf die 0°-Position P1 würde eine an der Aufhängung 5 angeordnete Rastnase 5.2 an einem Steg 1.3 der Zählwerkshaube 1.1 anstehen, was auf einen Positionsfehler eines oder mehrerer Mitnehmer 6.1 hinweisen würde. Funktionsfehler bei der Nullsetzung würden also auf diese Weise schon durch die Konstruktion vermieden.

Der an der gefederten Aufhängung 5 angeordnete Mitnehmerblock 6 gestattet ausserdem unter leichtem Andruck auf die Ziffernrollen das Spiel von Rollen zu Mitnehmern 6.1 zu reduzieren. Dadurch wird verhindert, dass sich die massgebenden Ziffern der vom Rollenantrieb abgewandten letzten Rollen, bei welchen sich das Spiel addiert, nicht mehr in der Mitte des drehbaren Anzeigefensters befinden. Alle Rollen werden damit uneingeschränkt ablesbar.

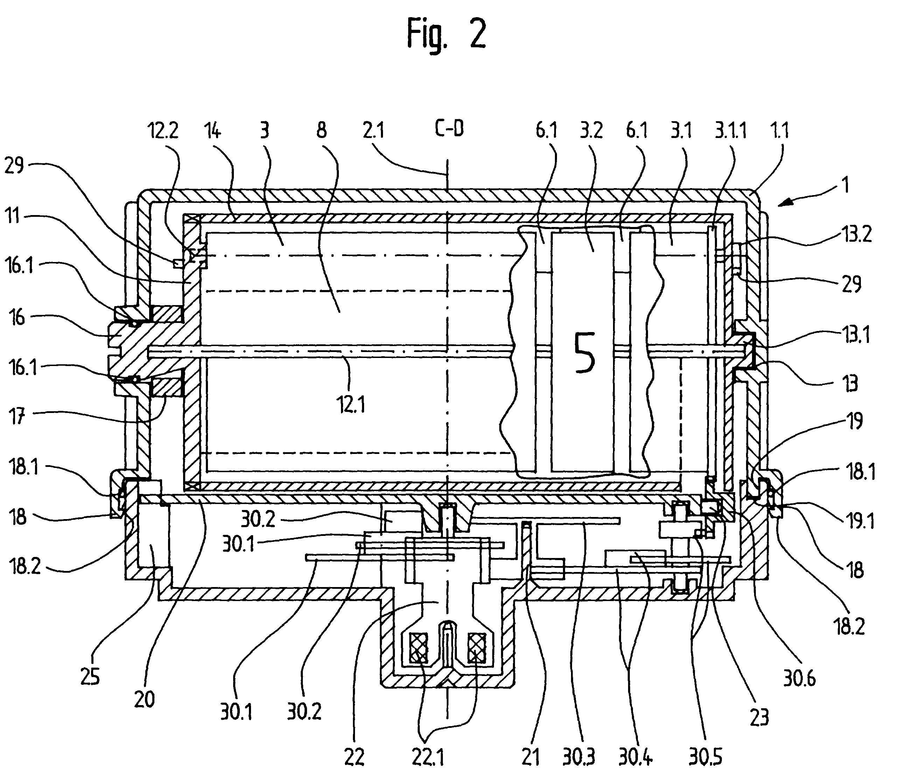

Der Rollenblockcontainer 4 ist zweiteilig gestaltet. Ein auf der linken Seite des Schnittes C-D der Fig. 2 dargestellte Flansch 11 trägt eine erste eingepresste Steckachse 12.1, auf die in von Gaszählern bekannter Montagetechnik die Ziffernrollen positions- und eingriffsrichtig aufgesteckt werden. In die Aufhängung 5 ist die Mitnehmerachse 12.2 eingepresst, auf die die Mitnehmer 6.1 positions- und eingriffsrichtig aufgesteckt werden. Der gegen den ersten Teil gegen Verdrehung verriegelte zweite Teil des Rollenblockcontainers 4 besteht aus einem ersten Gegenlager 13.1 für die erste Steckachse 12.1 und aus einem zweiten Gegenlager 13.2 der Aufhängung 5 für die Mitnehmerachse 12.2 sowie aus einem Mantel 14, der ein Ablesefenster 7 und das Rückstellfenster 8 enthält.

Das Ablesefenster 7 begrenzt den Blick auf die Rollen insoweit, dass ein Blickwinkel von ca. 35° frei bleibt.

Unterhalb des Ablesefensters 7 ist eine Zählernummer 15 beispielsweise auf einem Aufkleber 15.1 angebracht. Der Aufkleber 15.1 kann auch weitere Daten wie Zulassungszeichen, Zulassungsnummer und/oder auch ein Kundenlogo tragen, sodass die Daten des Aufklebers 15.1 beim Schwenken des Rollenblocks 3 in jeder Position mit der durch Rollenziffern und Ablesefenster 7 gebildete Anzeige des Zählerstandes abgelesen werden können.

In Kaltwasserinstallationen oder im Tropeneinsatz tritt bei Temperaturstürzen häufig das Problem der Kondensation von im Zählwerksinnenraum enthaltener Luftfeuchtigkeit auf, sodass sich auf der den Ziffernrollen zugewandten Innenseite des Zählwerksoberteils 1 kleine die Ablesung verhindernde Tröpfchen bilden. Abdichten und Vacuumieren der Zählwerke sind wegen der nicht diffusionsdichten allgemein bei Zählwerken verwendeten Kunststoffe keine langzeitbeständige Lösung. Zur Lösung des Problems werden üblicherweise entweder herstellungskostenungünstige Metallwerkbecher mit Mineralglasscheiben und Silikondichtungen oder mehrteilige teure Scheibenwischerkonstruktionen verwendet, die das Sichtfeld einschränken, leicht beschädigt werden können und sich auf die ästhetische Aufmachung des Gerätes negativ auswirken. Bei der erfindungsgemässen Lösung ist an der Unterseite des Ablesefensters 7 unmittelbar anschliessend an den Aufkleber 15.1 eine zur Steckachse 12.1 parallel verlaufende Wischlippe 15.2 angeordnet, die aus geeignetem Material, beispielsweise aus Gummi oder Vlies besteht. Beim Betätigen des Drehzapfens 16 wischt die Wischlippe 15.2 ein Feld von etwa 90° an der Innenseite der Zählwerkshaube 1.1 frei, wodurch die Ziffernrollen des Rollenblocks 3 und der Aufkleber 15.1 nach einem Beschlag erneut ablesbar sind.

Bei der Montage wird der mittels eines ersten O-Ringes 16.1 gegen die Zählwerkshaube 1 abgedichtete Drehzapfen 16 und somit der Rollenblockcontainer 4, nachdem das erste Gegenlager 13.1 in eine erste Bohrung 13 eingetaucht ist, über einen U-förmigen Schnappring 17 in seiner Position gesichert. Bei einer Trockenläuferkonstruktion, bei der das Zählwerk vom zu messenden Medium unbenetzt ist, entfällt der erste O-Ring 16.1.

Die äussere Form der Zählwerkshaube 1.1 ergibt einen stabilen Schutz der empfindlichen Bauteile gegen mechanischen Stress oder Manipulation. Durch den Rollenblockcontainer 4 sind ausserdem die Ziffernrollen zusätzlich geschützt.

Ein Schnapphaken 18 der Zählwerkshaube 1.1 steht in zerstörungsfreier lösbarer Verbindung mit einer dritten Nase 18.2 des Zählwerksunterteils 2. Die Verbindung zwischen der dem Zählwerksoberteil 1 zugehörigen Zählwerkshaube 1.1 und Zählwerksunterteil 2 kann von einem zweiten O-Ring 18.1 abgedichtet werden. Der Zählwerksunterteil 2 wird mittels eines in eine zweite Bohrung 19.1 eintauchenden Führungszapfens 19 verdrehsicher verriegelt und enthält einen in der Achse 2.1 verlaufenden Kupplungstrieb 22 mit einem Magneten 22.1 sowie ein Rädervorgelege 30 mit einem ersten Rad 30.1, einem zweiten Rad 30.2, einem dritten Rad 30.3, einem vierten Rad 30.4, einem fünften Rad 30.5 und mit einem sechsten Rad 30.6. Über das Rädervorgelege 30 kann in bekannter Weise durch verschiedene Zahnscheibenpaarungen das Übersetzungsverhältnis von einer nicht dargestellten Turbine zur Anzeige angepasst werden.

Durch den Einsatz einer zusätzlichen Zwischenlagerplatine 20 werden gegenüber bekannten Zählwerkskonstruktionen erhebliche Vorteile erreicht. Bei den herkömmlichen Zählwerkskonstruktionen befinden sich die Gegenlager der im Zählwerksunterteil angebrachten Lagerbuchsen der Zahnräder in der Zählwerkshaube, die mit dem Unterteil hermetisch abgedichtet werden muss sowie auch atmosphärischen Druckschwankungen und mechanischen Druck, z.B. durch Manipulation ausgesetzt sein kann. Die meistens plane Stirnfläche der Zählwerkshaube lässt sich eindrücken, sodass ein Stillstand der Räder erreicht werden kann.

Beim erfindungsgemässen Zählwerk ist der Zählwerksunterteil 2 durch die darüberliegende Zählwerkshaube 1.1 und eine Zwischenlagerplatine 20 geschützt. Die Zwischenlagerplatine 20 erlaubt ein Rädervorgelege 30 mit besonders kurzen Rädern mit einem geringen Achsialspiel, da sich der Lagerabstand nicht ändern kann. In der Folge ist auch für die Räder eine montagefreundliche einseitige Aufhängung 21, wie beispielsweise beim dritten Rad 30.3 gezeigt, möglich.

Ausserdem kann der aufgrund der erwünschten selbstreinigenden Messwerkkonstruktion längere Kupplungstrieb 22 erheblich verkürzt werden, sodass der aufgrund von Massenträgheit entstehende mögliche Abriss bei starker Anfangsbeschleunigung der Turbine vermieden wird. Zusätzlich dient die Zwischenlagerplatine 20 als Lager für den Kupplungstrieb 22 und das Rädervorgelege 30 sowie als Lagerzapfen 23 für das sechste Rad 30.6. In dieser Ausführungsvariante ist das sechste Rad 30.6 mit einer Stirn- und Kopfkreisverzahnung ausgerüstet und dient als Umlenkrad 30.6, das die Verbindung des Antriebes zwischen Rädervorgelege 30 und Rollenblock 3 herstellt. Das sechste Rad 30.6 ist erforderlich, weil die sonst übliche Schnecke oder der bei Gaszählern übliche äussere Stirnradeingriff keinen Platz findet.

In bekannter Weise greift das sechste Rad 30.6 in einen Zahnkranz 3.1.1 der niederwertigsten Ziffernrolle 3.1 des Rollenblockes 3 ein und treibt diese an. Die Umdrehungen der niederwertigsten Ziffernrolle 3.1 werden um den Faktor 10 vermindert auf den zugehörigen Mitnehmer 6.1 des Mitnehmerblockes 6 übertragen und von dieser auf die höherwertige Ziffernrolle 3.2. Die übrigen bis und mit der höchstwertigen Ziffernrolle werden in sinngemässer Weise angetrieben.

Die Zwischenlagerplatine 20 ist über Stege 25 und zweite Zapfen 25.1 präzise und verformungsfrei im Zählwerksunterteil 2 aufgehängt. Zur Verbesserung der magnetischen Abschirmung kann die Zwischenlagerplatine 20 teilweise oder ganz aus einem magnetischen Material hergestellt werden, um dann zusammen mit weiteren Abschirmungsmassnahmen am Gehäuse des Zählers einen nahezu geschlossenen Faradayischen Käfig zu bilden. Ein Magnet der nicht dargestellten Turbine und der Magnet 22.1 des Kupplungstriebes 22 bilden eine Magnetkupplung, die die Drehbewegung der Turbine auf den Kupplungstrieb 22 überträgt. Durch den kurzen Kupplungstrieb 22 ist im kritischen zentralen Bereich kein Durchbruch mehr erforderlich.

Die Zwischenlagerplatine 20 kann bei einem Zähler mit elektronischer Anzeige vorteilhaft als Trennwand zwischen dem Rädervorgelege 30 und der Elektronik (Batterie, LCD-Anzeige und Leiterplatine) verwendet werden. Die Form der Zählwerkshaube 1.1 würde auch hier zur Verbesserung der Ablesefähigkeit eine schwenkbare elektronische Anzeige (beispielsweise LCD-Anzeige) zulassen.

Durch die konstruktionsbedingte Trennung der Montage von Rollenblock 3 und Rädervorgelege 30 werden die bei den üblichen Einplatinenmontagen beider Baugruppen innerhalb eines Zählwerkes entstehenden Schwierigkeiten vermieden. Die Montagezeit wird verkürzt und eine grössere Montagesicherheit, die auch Voraussetzung für die Reparaturfähigkeit ist, erreicht. Da der Kupplungstrieb 22 zur Justierung des Zählers optisch schwer erreichbar unterhalb des Rollenblockcontainer 4 liegt, wird für die Zählereinstellung das Zahnprofil 26 des Rades 30.1 abgefragt. Dabei werden in üblicher Weise die Zähne mittels eines optoelektronischen Sensors als Impulse gezählt und so eine hohe Auflösung gegen das Eichnormal erreicht. Die manchmal geforderte Zeigerfunktion kann über einen Aufdruck auf das dritte Rad 30.3 erreicht werden. Der Zeigerkreis ermöglicht bei Prüfeinrichtungen, die nicht über eine Impulsauswertung verfügen, eine Auflösung der Ablesung nach der ISO Norm 4064 auf beispielsweise 0,05 Liter.

Die besondere Form der Zählwerkshaube 1.1 erlaubt über ein Umlenkprisma 28 und eine erste Lupe 31 einen Zeigerkreis 27 des dritten Rades 30.3 und über eine zweite Lupe 32 ein Zahnprofil 26 des ersten Rades 30.1 direkt abzulesen. Die schwenkbare Anzeige gestattet auch bei bestimmten Zählereinbaulagen, beispielsweise bei Unterputzeinbau in waagrechte Rohrleitungen, eine höhere messtechnische Klasse zu erreichen, bei der ein grösserer Messbereich möglich ist, weil durch die vertikale Anordnung der schnelllaufenden Räder des Vorgeleges 30 geringere Reibungsverluste entstehen.

Es ist auch möglich, mit der Zwischenlagerplatine 20 ganzflächig - nur unterbrochen durch einen kleinen Durchbruch für das Umlenkrad 30.6 - das Unterteil 2 vom Oberteil 1 zu trennen, sodass bei einer Nassläuferkonstruktion - mit einer druckstabilisierten Zählwerkshaube 1.1 - der Rollenblock 4 weitgehend gegen Verschmutzung durch ständig zirkulierendes Wasser während der Messung geschützt wird. Die Form der Zählwerkshaube 1.1 lässt aufgrund ihrer Form eine besondere Druckfestigkeit zu, die besser ist als diejenige einer flachen Sichtglasscheibe. Die Ablesefähigkeit wird bei dieser Konstruktion nicht eingeschränkt.

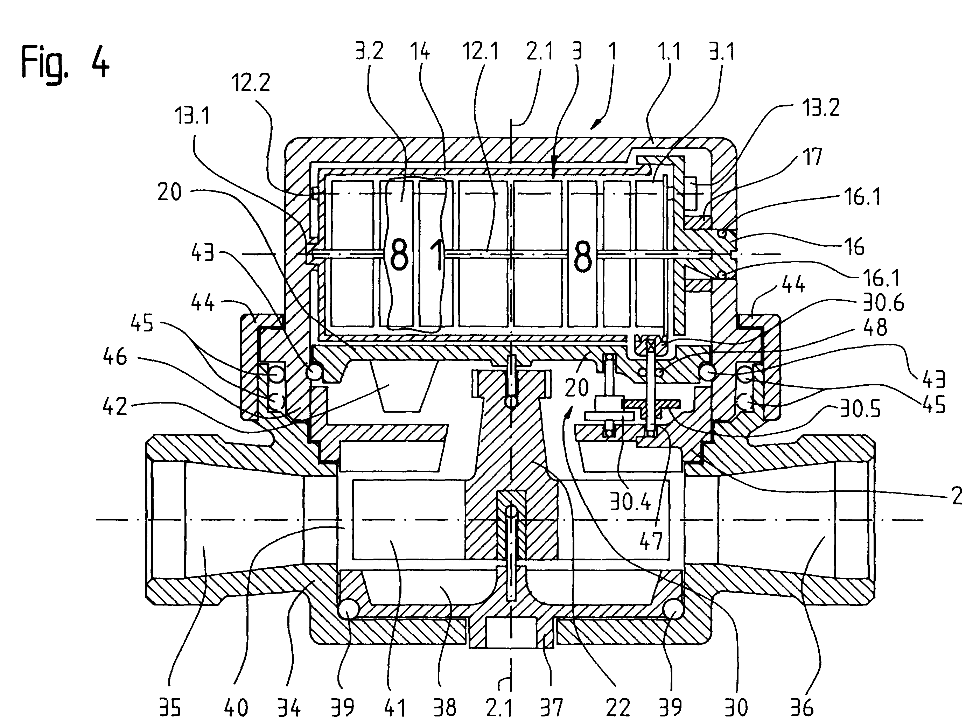

Fig. 4 zeigt einen Zähler mit dem erfindungsgemässen Zählwerk, welches mit einer vom zu messenden Medium getrennten Flüssigkeit gefüllt ist. Beim flüssigkeitsgefüllten Zählwerk entfällt die Wischlippe 15.2, die übrigen Teile und Funktionen des Zählwerkes entsprechen dem Zählwerk der Fig. 1 bis 3. Ein Gehäuse 34 mit einem Einlass 35 und einem Auslass 36 weist einen Boden 37 mit Staurippen 38 auf, der zur Eichung des Zählers drehbar ist und mit einem vierten O-Ring 39 gegenüber dem Gehäuse 34 abgedichtet ist. In einer Messkammer 40 des Gehäuses 34 ist ein rotationssymmetrisch zur Achse 2.1 angeordnetes Flügelrad 41 vorgesehen, das vom durchströmenden nicht dargestellten Medium angetrieben wird. Die Rotationsbewegung des Flügelrades 41 wird mittels des Kupplungstriebes 22 kupplungsfrei auf das nicht vollständig dargestellte Rädervorgelege 30 übertragen. Der Zählwerksunterteil 2 mit dem Rädervorgelege 30 wird vom zu messenden Medium umströmt, wobei eine Membran 42 für den Druckausgleich sorgt. Die Zwischenlagerplatine 20 trennt den Zählwerksunterteil 2 ganzflächig vom Zählwerksoberteil 1. Ein fünfter O-Ring 43 zwischen der Zwischenlagerplatine 20 und der Zählwerkshaube 1.1 dichtet den Zählwerksunterteil 2 gegenüber dem Zählwerksoberteil 1 ab.

Ein schraubbarer Kopfring 44 verbindet die Zählwerkshaube 1.1 mit dem Gehäuse 34, wobei ein sechster O-Ring 45 die Dichtung zwischen dem Gehäuse 34 und einem konischen Ring 46 der Zählwerkshaube 1.1 sicherstellt. Der sechste O-Ring 45 ist so bemessen, dass mit der mit unterbrochener Linie gezeigten Position des sechsten O-Ringes 45 eine genügende Dichtung vorhanden ist und das Zählwerk gegenüber dem Gehäuse drehbar ist. Mit dem Druck des Mediums wird der sechste O-Ring 45 in die mit ganzer Linie gezeigte Position gepresst, in der eine Drehung des Zählwerkes nicht mehr möglich ist.

Das vierte Rad 30.4 des Rädervorgeleges 30 treibt das auf einer Stehachse 47 angeordnete fünfte Rad 30.5 an. Die Stehachse 47 durchdringt die Zwischenlagerplatine 20 und ist gegenüber dieser mit einem siebten O-Ring 48 abgedichtet. Das sechste Rad 30.6 des Rädervorgeleges 30 ist rollenblockseitig an der Stehachse 47 angeordnet und treibt die niederwertigste Ziffernrolle 3.1 an. In dieser Ausführungsvariante ist das sechste Rad 30.6 als Kronrad ausgeführt, das in die Verzahnung der niederwertigsten Ziffernrolle 3.1 eingreift.

## Patentansprüche

1. Zählwerk für Flüssigkeits- und Gaszähler bestehend aus einem Zählwerksoberteil (1) und einem Zählwerksunterteil (2), in dem ein Kupplungstrieb (22) in einer Achse (2.1) des Zählwerksunterteils (2) verläuft, wobei der Kupplungstrieb (22) zählwerksseitig eine im Zählwerksoberteil (1) angeordnete Zähleinrichtung (3) antreibt, die von einer Zählwerkshaube (1.1) umschlossen wird, durch die eine Anzeige der Zähleinrichtung (3) ablesbar ist,
dadurch gekennzeichnet,
dass die Zähleinrichtung (3) und die Anzeige in einem schwenkbaren Container (4) angeordnet sind.

2. Zählwerk nach Anspruch 1,
dadurch gekennzeichnet,
dass der Container (4) zwischen einem ersten Endanschlag (1.2) der Zählwerkshaube (1.1) und einem zweiten Endanschlag (2.2) einer Zwischenlagerplatine (20) schwenkbar ist.

3. Zählwerk nach Anspruch 1 und 2,
dadurch gekennzeichnet,
dass die Zähleinrichtung (3) einen aus Ziffernrollen bestehender Rollenblock (3) mit einem Mitnehmerblock (6) aufweist und
dass die Anzeige der Zähleinrichtung (3) aus den Ziffern der Ziffernrollen und einem Ablesefenster (7) besteht.

4. Zählwerk nach Anspruch 1 und 2,
dadurch gekennzeichnet,
dass die Zähleinrichtung (3) elektronische Stromkreise aufweist und
dass die Anzeige der Zähleinrichtung (3) aus einer elektronischen Anzeige besteht.

5. Zählwerk nach den Ansprüchen 1 bis 4,
dadurch gekennzeichnet,
dass der Kupplungstrieb (22) ein im Zählwerksunterteil (2) angeordnetes Rädervorgelege (30) antreibt, das mittels eines sechsten Rades (30.6) die Zähleinrichtung (3) antreibt.

6. Zählwerk nach Anspruch 5,
dadurch gekennzeichnet,
dass das Zählwerksunterteil (2) zählwerksseitig eine als Lager des Kupplungstriebes (22) und des Rädervorgeleges (30) dienende Zwischenlagerplatine (20) aufweist und
dass die Zählwerkshaube (1.1) den Zählwerksunterteil (2) zählwerkseitig abschliesst.

7. Zählwerk nach Anspruch 6,
dadurch gekennzeichnet,
dass das Zählwerksunterteil (2) mittels Schnapphaken (18) und dritter Nase (18.2) in lösbarer Verbindung mit der Zählwerkshaube (1.1) steht.

8. Zählwerk nach Anspruch 6,
dadurch gekennzeichnet,
dass die Zählwerkshaube (1.1) einen konischen Ring (46) aufweist, an dem ein mittels des Druckes des zu messenden Mediums verschiebbarer sechster O-Ring (45) angeordnet ist, wobei der sechste O-Ring (45) die mittels eines Kopfringes (44) mit einem Gehäuse (34) verbindbare Zählwerkshaube (1.1) gegen das Gehäuse (34) abdichtet.

9. Zählwerk nach Anspruch 6,
dadurch gekennzeichnet,
dass die Zwischenlagerplatine (20) geschlossen ist und gegenüber der Zählwerkshaube (1.1) mittels eines fünften O-Ringes (43) abgedichtet ist, wobei der Zählwerksoberteil (1) mit einer vom zu messenden Medium getrennten Flüssigkeit gefüllt ist und
dass eine die Zwischenlagerplatine (20) durchdringende vom Rädervorgelege (30) angetriebene Stehachse (47) vorgesehen ist, an der rollenblockseitig das sechste Rad (30.6) angeordnet ist.

10. Zählwerk nach den Ansprüchen 1 bis 9,
dadurch gekennzeichnet,
dass die Zählwerkshaube (1.1) mindestens ein Umlenkprisma (28) und mindestens eine Lupe (31, 32) aufweist, mittels denen auf den Rädern (30.1, 30.3) des Rädervorgeleges (30) angeordnete Markierungen von aussen ablesbar sind.

11. Zählwerk nach den Ansprüchen 1 bis 3,
dadurch gekennzeichnet,
dass der Container (4) einen Drehzapfen (16), ein Ablesefenster (7), eine Wischlippe (15.2), ein Rückstellfenster (8), einen Mantel (14), eine erste Steckachse (12.1) und ein erstes Gegenlager (13.1) für die Ziffernrollen und eine Aufhängung (5) für eine Mitnehmerachse (12.2) mit einem zweiten Gegenlager (13.2) für die Mitnehmer (6.1) des Mitnehmerblockes (6) aufweist, wobei der Drehzapfen (16) und das erste Gegenlager (13.1) in schwenkbarer Verbindung mit der Zählwerkshaube (1.1) steht und der Container (4) mittels des von aussen betätigbaren Drehzapfens (16) zwischen den Endanschlägen (1.2, 2.2) schwenkbar ist.

12. Zählwerk nach den Ansprüchen 1, 2 und 4,
dadurch gekennzeichnet,
dass der Container (4) einen Drehzapfen (16), ein Ablesefenster (7), eine Wischlippe (15.2), einen Mantel (14) und ein erstes Gegenlager (13.1) aufweist, wobei der Drehzapfen (16) und das erste Gegenlager (13.1) in schwenkbarer Verbindung mit der Zählwerkshaube (1.1) steht und der Container (4) mittels des von aussen betätigbaren Drehzapfens (16) zwischen den Endanschlägen (1.2, 2.2) schwenkbar ist.

13. Zählwerk nach Anspruch 10,
dadurch gekennzeichnet,
dass die Zählwerkshaube (1.1) eine Nasenreihe bildende erste Nasen (9) aufweist, an der die Mitnehmer (6.1) des Mitnehmerblockes (6) bei der Rücksetzung der Ziffernrollen in der Einrastposition gehalten werden, dass die Zählwerkshaube (1.1) zweite Nasen (9.1) aufweist, an denen bei der Rücksetzung der Ziffernrollen der Mitnehmerblock (6) mittels an einer Aufhängung (5) angeordneten ersten Zapfen (29) angehoben wird und
dass die Aufhängung (5) eine Rastnase (5.2) aufweist, die beim Zurückdrehen des angehobenen Mitnehmerblockes (6) an einem Steg (1.3) der Zählwerkshaube (1.1) ansteht.

14. Zählwerk nach Anspruch 3,
dadurch gekennzeichnet,
dass die Mitnehmer (6.1) des Mitnehmerblockes (6) an einer von der Aufhängung (5) getragenen Mitnehmerachse (12.2) angeordnet sind und
dass zur Vermeidung des Spiels zwischen Mitnehmern (6.1) und Ziffernrollen die Aufhängung (5) in eine als Feder wirkende Zunge (5.1) des Rollenblockcontainers (4) übergeht.

## Claims

1. Counting mechanism for liquid and gas meters, consisting of a counting mechanism top part (1) and counting mechanism bottom part (2), in which a coupling drive (22) runs in one axis (2.1) of the counting mechanism bottom part (2), wherein on the counting mechanism side the coupling drive (22) drives a counting device (3) arranged in the counting mechanism top part (1), said counting device (3) being surrounded by a counting mechanism hood (1.1), through which a display of the counting device (3) can be read,
characterised in that
the counting device (3) and the displays are arranged in a pivotable container (4).

2. Counting mechanism according to Claim 1,
characterised in that
the container (4) can be pivoted between a first end-stop (1.2) of the counting mechanism hood (1.1) and a second end-stop (2.2) of an intermediate bearing plate (20).

3. Counting mechanism according to Claims 1 and 2,
characterised in that
the counting device (3) has a drum unit (3) [sic] consisting of number drums with an entrainment unit (6), and
that the display of the counting device (3) consists of the numbers on the number drums and a reading window (7).

4. Counting mechanism according to Claims 1 and 2,
characterised in that
the counting device (3) has electronic circuits and
that the display of the counting device (3) consists of an electronic display.

5. Counting mechanism according to Claims 1 to 4,
characterised in that
the coupling drive (22) drives wheel gear (30) arranged in the counting mechanism bottom part (2), said wheel gear (30) driving the counting device (3) by means of a sixth wheel (30.6).

6. Counting mechanism according to Claim 5,
characterised in that
on the counting mechanism side, the counting mechanism bottom part (2) has an intermediate bearing plate (20) acting as a bearing for the coupling drive (22) and the wheel gear (30) and
that the counting mechanism hood (1.1) seals off the counting mechanism bottom part (2) on the counting mechanism side.

7. Counting mechanism according to Claim 6,
characterised in that
the counting mechanism bottom part (2) is connected in a releasable manner to the counting mechanism hood (1.1) by means of snap-hooks (18) and a third lug (18.2).

8. Counting mechanism according to Claim 6,
characterised in that
the counting mechanism hood (1.1) has a conical ring (46), on which a sixth O-ring (45) displaceable by the pressure of the medium being measured is arranged, wherein the sixth O-ring (45) seals off from a housing (34) the counting mechanism hood (1.1) connectable to the housing (34) by means of a cap ring (44).

9. Counting mechanism according to Claim 6,
characterised in that
the intermediate bearing plate (2()) is closed and is sealed in relation to the counting mechanism hood (1.1) by means of a fifth O-ring (43), wherein the counting mechanism top part (1) is filled with a liquid isolated from the medium being measured and
that a vertical spindle (47) driven by the wheel gear (30) and passing through the intermediate bearing plate (20) is provided, on which the sixth wheel (30.6) is arranged on the drum unit side.

10. Counting mechanism according to Claims 1 to 9,
characterised in that
the counting mechanism hood (1.1) has at least one deviating prism (28) and at least one magnifying glass (31, 32), by means of which the markings provided on the wheels (30.1, 30.3) of the wheel gear (30) can be read from the outside.

11. Counting mechanism according to Claims 1 to 3,
characterised in that
the container (4) has a trunnion (16), a reading window (7), a wiper lip (15.2), a resetting window (8), a jacket (14), a first knock-out spindle (12.1) and a first thrust bearing (13.1) for the number drums and a suspension (5) for an entrainment spindle (12.2) with a second thrust bearing (13.2) for the entrainment devices (6.1) of the entrainment unit (6), wherein the trunnion (16) and the first thrust bearing (13.1) are pivotably connected to the counting mechanism hood (1.1) and the container (4) can be pivoted between the end stops (1.2, 2.2) by means of the trunnion (16), which is capable of being operated from outside.

12. Counting mechanism according to Claims 1, 2 and 4,
characterised in that
the container has a trunnion (16), a leading window (7), a wiper lip (15.2), a jacket (14) and a first thrust bearing (13.1), wherein the trunnion (16) and the first thrust bearing (13.1) are pivotably connected to the counting mechanism hood (1.1) and the container (4) can be pivoted between the end stops (1.2, 2.2) by means of the trunnion (16), which can be operated from outside.

13. Counting mechanism according to Claim 10,
characterised in that
the counting mechanism hood (1.1) has first lugs (9), forming a row of lugs, on which the entrainment devices (6.1) of the entrainment unit (6) are retained when the number drums are returned to the latch-in position,
that the counting mechanism hood (1.1) has second lugs (9.1), on which the entrainment unit (6) is raised by means of a first pin (29) arranged on a suspension (5) when the number drums are reset, and
that the suspension (5) has a latching lug (5.2) which engages with a bar (1.3) on the counting mechanism hood (1.1) when the raised entrainment unit (6) is turned back.

14. Counting mechanism according to Claim 3,
characterised in that
the entrainment devices (6.1) of the entrainment unit (6) are arranged on an entrainment spindle (12.2) supported by the suspension (5), and
that, in order to prevent play between entrainment devices (6.1) and number drums, the suspension (5) merges into a tongue (5.1) of the drum unit container (4), acting as a spring.

## Revendications

1. Mécanisme compteur pour compteurs de liquide et de gaz, se composant d'une partie supérieure (1) et d'une partie inférieure (2) dans laquelle un pignon d'accouplement (22) se trouve sur un axe (2.1) de la partie inférieure (2) du mécanisme compteur, le pignon d'accouplement (22) entraînant, du côté du mécanisme compteur, un totalisateur (3) qui est disposé dans la partie supérieure (1) du mécanisme compteur et qui est entouré par un capot (1.1) du mécanisme compteur à travers lequel un indicateur du totalisateur (3) est lisible, caractérisé en ce que le totalisateur (3) et l'indicateur sont disposés dans une enceinte orientable (4).

2. Mécanisme compteur selon la revendication 1, caractérisé en ce que l'enceinte (4) peut tourner entre une première butée de fin de course (1.2) du capot (1.1) du mécanisme compteur et une seconde butée de fin de course (2.2) d'une platine de montage intermédiaire (20).

3. Mécanisme compteur selon la revendication 1 ou 2, caractérisé en ce que le totalisateur (3) comporte un bloc de roulettes (3), constitué par des roulettes à chiffres, avec un bloc de tocs d'entraînement (6), et en ce que l'indicateur du totalisateur (3) est constitué par les chiffres des roulettes à chiffres et par une fenêtre de lecture (7).

4. Mécanisme compteur selon la revendication 1 ou 2, caractérisé en ce que le totalisateur (3) comporte des circuits électroniques, et en ce que l'indicateur du totalisateur (3) est constitué par un afficheur électronique.

5. Mécanisme compteur selon l'une quelconque des revendications 1 à 4, caractérisé en ce que le pignon d'accouplement (22) entraîne un engrenage réducteur (30) qui est disposé dans la partie inférieure (2) du mécanisme compteur et qui entraîne le totalisateur (3) par l'intermédiaire d'une sixième roue (30.6).

6. Mécanisme compteur selon la revendication 5, caractérisé en ce que la partie inférieure (2) du mécanisme compteur comporte, du côté du mécanisme compteur, une platine de montage intermédiaire (20) qui sert de support pour le pignon d'accouplement (22) et l'engrenage réducteur (30), et en ce que le capot (1.1) du mécanisme compteur ferme la partie inférieure (2) du mécanisme compteur du côté du mécanisme compteur.

7. Mécanisme compteur selon la revendication 6, caractérisé en ce que la partie inférieure (2) du mécanisme compteur est assemblée de façon détachable au capot (1.1) du mécanisme compteur au moyen d'un fermoir à déclic (18) et d'un talon d'accrochage (18.2).

8. Mécanisme compteur selon la revendication 6, caractérisé en ce que le capot (1.1) du mécanisme compteur comporte un collet conique (46) sur lequel est disposé un sixième joint torique d'étanchéité (45) déplaçable sous l'effet de la pression du fluide à mesurer, le sixième joint tonique (45) assurant l'étanchéité entre le capot (1.1) du mécanisme compteur, qui peut être assemblée à un carter (34) au moyen d'un écrou à tête (44), et le carter (34).

9. Mécanisme compteur selon la revendication 6, caractérisé en ce que la platine de montage intermédiaire (20) est aveugle et est jointe de manière étanche au capot (1.1) du mécanisme compteur au moyen d'un cinquième joint torique d'étanchéité (43), la partie supérieure (1) du mécanisme compteur étant remplie d'un liquide séparé du fluide à mesurer, et en ce qu'il est prévu un axe vertical (47) qui traverse la platine de montage intermédiaire (20), est entraîné par l'engrenage réducteur (30) et sur lequel la sixième roue (30.6) est monté du côté du bloc de roulettes.

10. Mécanisme compteur selon l'une quelconque des revendications 1 à 9, caractérisé en ce que le capot (1.1) du mécanisme compteur comporte au moins un prisme déviateur (28) et au moins une loupe (31,32), au moyen desquels des marques disposées sur les roues (30.1, 30.3) de l'engrenage réducteur (30) sont lisibles de l'extérieur.

11. Mécanisme compteur selon l'une quelconque des revendications 1 à 3, caractérisé en ce que l'enceinte (4) comporte un tourillon (16), une fenêtre de lecture (7), une lèvre d'essuyage (15.2), une fenêtre (8) pour remise à l'état initial, une enveloppe (14), un premier axe d'enfichage (12.1) et une première butée (13.1) pour les roulettes à chiffres, ainsi qu'une suspension (5) pour un axe (12.2) des tocs d'entraînement, avec une seconde butée (13.2) pour les tocs d'entraînement (6.1) du bloc de tocs d'entraînement (6), le tourillon (16) et la première butée (13.1) étant montés dans le capot (1.1) du mécanisme compteur de manière à pouvoir tourner et l'enceinte (4) pouvant tourner entre les butées de fin de course (1.2, 2.2) au moyen du tourillon (16) qui peut être actionné de l'extérieur.

12. Mécanisme compteur selon l'une quelconque des revendications 1, 2 et 4, caractérisé en ce que l'enceinte (4) comporte un tourillon (16), une fenêtre de lecture (7), une lèvre d'essuyage (15.2) une enveloppe (14) et une première butée (13.1), le tourillon (16) et la première butée (13.1) étant montés dans le capot (1.1) du mécanisme compteur de manière à pouvoir tourner et l'enceinte (4) pouvant tourner entre les butées de fin de course (1.2, 2.2) au moyen du tourillon (16) qui peut être actionné de l'extérieur.

13. Mécanisme compteur selon la revendication 10, caractérisé en ce que le capot (1.1) du mécanisme compteur comporte des premiers taquets (9) qui forment une rangée de taquets et sur lesquels les tocs d'entraînement (6.1) du bloc de tocs d'entraînement (6) sont maintenus en position d'encliquetage lors de la remise à l'état initial des roulettes à chiffres, en ce que le capot (1.1) du mécanisme compteur comporte des second taquets (9.1), sur lesquels le bloc de tocs d'entraînement (6) est soulevé au moyen de premières chevilles (29) disposées sur une suspension (5) lors de la remise à l'état initial des roulettes à chiffres, et en ce que la suspension (5) comporte un taquet d'arrêt (5.2) qui s'applique sur une nervure (1.3) du capot (1.1) du mécanisme compteur lorsque le bloc de tocs d'entraînement (5) soulevé est ramené en arrière par rotation.

14. Mécanisme compteur selon la revendication 3, caractérisé en ce que les tocs d'entraînement (6.1) du bloc de tocs d'entraînement (6) sont montés sur un axe (12.2) porté par la suspension (5), et en ce qu'afin d'éviter du jeu entre les tocs d'entraînement (6.1) et les roulettes à chiffres, la suspension (5) se prolonge en une languette de l'enceinte du bloc de roulettes, agissant comme un ressort.
